# EUROPEAN PATENT SPECIFICATION

(11) **EP 2 177 650 B1**
(45) Date of publication and mention of the grant of the patent: **31.08.2011**
(21) Application number: 09172691.9
(22) Date of filing: 09.10.2009
(51) Int. Cl.: D01F 4/02, B29C 41/00

(54) **Apparatus and method for the manfacture of a silk mono-filament with a high tensile strength**
Apparatur und Verfahren zur Herstellung von Seidenfasern mit hoher Festigkeit
Appareil et méthode de production d'un monofilament en soie ayant une résistance à la traction élevéés

(30) Priority: 17.10.2008 US 106479 P; 17.10.2008 GB 0819056
(43) Date of publication of application: 21.04.2010
(73) Proprietor: Spintec Engineering GmbH, 52066 Aachen (DE)
(72) Inventor: Rheinnecker, Michael, 52066, Aachen (DE); Boebel, Melanie, 52066, Aachen (DE); Zimmat, Rolf, 52066, Aachen (DE)
(74) Representative: Harrison, Robert John

(56) References cited:
- WO-A-2007/031301
- WO-A-2008/052755
- US-A1- 2004 224 406
- US-A1- 2005 054 830

## Description

### Field ofInvention

The present invention teaches an apparatus and a method for the manufacture of a native single silk mono-filament with a tensile strength of at least 40 Newtons. The native single silk mono-filament can have applications for the use as a musical string and in medical devices.

### Background of the Invention

The use of a silk filament as a string for a musical instrument has been known in China for more than 2000 years. A method for the manufacture of the silk filament for the use as the string for the musical instrument has remained essentially the same for many centuries.

Strings used in musical instruments need to be placed under a high tension in order to ensure high quality and volume of the sound generated by the resonance of the musical string. It is known that the musical string used in a classical violin requires a tension ranging from 30 Newtons to 100 Newtons (see product brochure of string maker Thomastik Infeld GmbH, Vienna, Austria and the range of Vision Solo and Dominant strings of the product brochures of string maker Pirastro GmbH, Offenbach, Germany and the range ofEvah Pirazzi, Obligato and Violino strings).

Currently a native single silk mono-filament fibre can withstand a tensile strength of approximately 0.5 Newton. The tensile strength of 0.5 Newton is due to the diameter of the single silk mono-filament fibre which is in the range of 10-100 µm. The tensile strength of the native single silk mono-filament fibre is approximately 60 times less than the tensile strength of the violin string. Hence, when using silk fibres for a core of the musical string, string makers have to overcome the problem of insufficient mechanical strength of the native silk mono-filaments by combining a plurality of silk mono-filaments to manufacture the silk multi-filament fibre. The silk multi-filaments fibre, due to the combination of the plurality of silk mono-flaments fibres provides the sufficient mechanical strength that is able to withstand the tension required for use as the musical string.

In general, the musical string that is comprised of silk is manufactured by collecting a large number of individual silk threads from a silkworm cocoon. The silk threads are then combined into bundles. The bundles are then twisted tightly together to form the silk multi-filament fibre. The silk multi-filament fibre is then immersed in liquid glue. The liquid glue provides improved mechanical and acoustic properties to the musical string that is comprised of silk.

A detailed description for the manufacture of the musical string that comprises silk has been published by Alexander Raykov on the internet (see www.globalissuesgroup.com/silk-strings/howsilk.html.).

In contrast, musical strings that comprise of gut, polymers (nylon) or metal (steel) can be manufactured with the string core comprising of both mono-filament fibres or multi-filament fibres, these musical strings are able to withstand the mechanical tension required by the musical string. The choice between a string core manufactured from the mono-filament fibre or the multi-filament fibre provides string manufactures with a degree of flexibility for the development of musical strings with different musical characteristics and high volumes of sound. As a consequence the musical strings that comprise gut, polymers (nylon) or metal (steel) have now almost completely replaced silk strings for use as musical strings due to their broader range of musical characteristics and their easier handling.

Today the use of the musical strings that comprise of silk are confined to niche applications such as historical and Chinese musical instruments.

The state of the art for the manufacture of mechanically strong silk filaments follows two general strategies.

The first strategy for the manufacture of mechanically strong silk filaments uses a method that combines individual native silk fibres into bundles. The bundles are then combined into ropes, whereby the ropes are used for making mechanically strong silk multi-filaments fibres. Such an example of this the use of silk multi-filaments fibres is in medical applications for the use in ligament replacement. Other examples of the use of silk multi-filaments fibres are in tennis racket strings. An example that discloses the combination of individual native silk fibres into bundles is described in US Patent Application No. 2004/0224406 by Altmann et al. Altmann et al. teaches a method for manufacturing twisted ropes which are assembled from of a plurality of individual native silk fibres. The twisted ropes are used for manufacturing substitutes for ligaments in medical applications. The Altmann et al. document discloses (in table 1 and 4) an average tensile strength of 0.52 Newton to 0.9 Newton per native silk mono-filament.

The second strategy for the manufacture of mechanically strong silk filaments uses regenerated silk. The regenerated silk is obtained by dissolving silk in a solvent and spinning the regenerated silk doped solvent by a variety of different spinning techniques. The International Patent Application, WO 02/081793 by John S. Crighton discloses the manufacture of silk filaments from regenerated silk, wherein the silk filaments have a tensile strength of 1.2 Newtons per silk filament.

To date there is no published method or apparatus for the manufacture of single silk mono-filaments with a tensile strength above 10 Newton per silk mono-filament. International patent publication No. WO 2008/052755 by Rheinnecker et al is titled "Method and apparatus for the manufacture of a fibre". The 052755 document discloses an apparatus for extruding a material onto a moving surface for the manufacture of a fibre. International patent publication No. WO 2007/031301 by Scheibel et al is titled "Method and device for producing a thread from silk proteins". The 031301 document discloses a high performance diffusion apparatus for producing the silk threads. US patent application publication No. US 2005/0054830 by Islam et al. is titled "Methods and apparatus for spinning spider silk protein". The 0054830 document relates to extruding and fibres though a spinneret. The manufactured filament may be stretched or drawn to impart further strength with a coagulation bath.

A method and apparatus that is capable of manufacturing single silk mono-filaments with a tensile strength of 40 Newtons and higher would therefore be highly advantageous.

The manufacture of silk films and silk membranes from regenerated silk fibroin or artificially-made silk proteins and peptides is known. An example for the manufacture of regenerated silk membranes is described in the International Patent Publication No. WO 2005/012606 by Kaplan et al. The Kaplan et al. document discloses the manufacture of silk fibroin films from regenerated silk by dissolving a silk protein in a protein denaturing solvent. An example of the artificial silk protein membrane is described in International Patent Publication No WO 2006/008163 by Scheibel et al. The Scheibel et al. document teaches the manufacture of silk fibroin films from artificial silk proteins.

However, there is only a small amount of prior art that discloses the manufacture of silk fibroin membranes from native silk fibroin protein solutions which are manufactured without the use of protein denaturing agents such as strong salts, solvents, heat or other protein denaturing conditions. For example US Patent Publication No. US 7,041,797 (by Vollrath) and the International Patent Publication No. WO 2007/09851 (by Rheinnecker et al.) teaches the manufacture of native silk fibroin solutions. Upon using the inventions by Vollrath and Rheinnecker, the present applicant has discovered that products manufactured from native silk fibroin solutions tend to undergo contraction during the drying process of the silk products. The contraction leads to irregular deviation from the intended shape of the silk products. For native silk protein products with a thickness of up to 0.2 mm, these deformations are less pronounced and can be reduced to edge effects. However, for silk products with a required thickness above 0.2 mm the final physical shape of those products after drying is difficult to control. For example, silk membranes with a thickness of above 0.2 mm which are casted from a native silk fibroin solution often develop irregular and uneven surfaces and shapes. These silk membranes require further mechanical treatment after casting.

There is therefore a need for an improved casting technique which avoids the physical deformation which occurs during the drying of the protein solution and a need that allows the manufacture of silk protein products with a thickness of more than 0.2 mm.

### Summary of Invention

A casting apparatus and a method for the manufacture of an object, such as a single silk mono-filament fibre is discussed.

The casting apparatus comprises a stationary solid support with at least one water or water vapour permeable surface for supporting a first surface of the object and allows diffusion from the object. The solid support has an exposed region allowing a second surface of the single silk mono-filament fibre to be in contact with a gas.

The water-permeable surface avoids problems associated with the physical deformation of the single silk mono-filament fibres that occurs during drying of a native silk protein solution.

The use of the water-permeable surface in the casting apparatus enables the evaporation of the solvent of the native silk protein solution not only to the air/solvent interface, but also through the contact of the native silk protein solution with the first surface of the water-permeable surface by diffusion.

The water permeable surface improves the drying process of the native silk protein solution which could not have been anticipated by the prior art.

Products of single silk mono-filament fibres that are manufactured according to the present disclosure are described.

A further object of the present disclosure teaches that naturally occurring, non-artificial silk proteins derived from Bombyx Mori silkworms can be manufactured into single silk mono-filament fibres which can withstand tensile forces of at least 40 Newtons and above.

A further object of the present disclosure is a use of the manufactured single silk mono-filament fibres as a string for a musical instrument and for applications in a medical device.

### Description of Figures

Figure 1 shows a schematic for a method for the manufacture of a single silk mono-filament fibre.

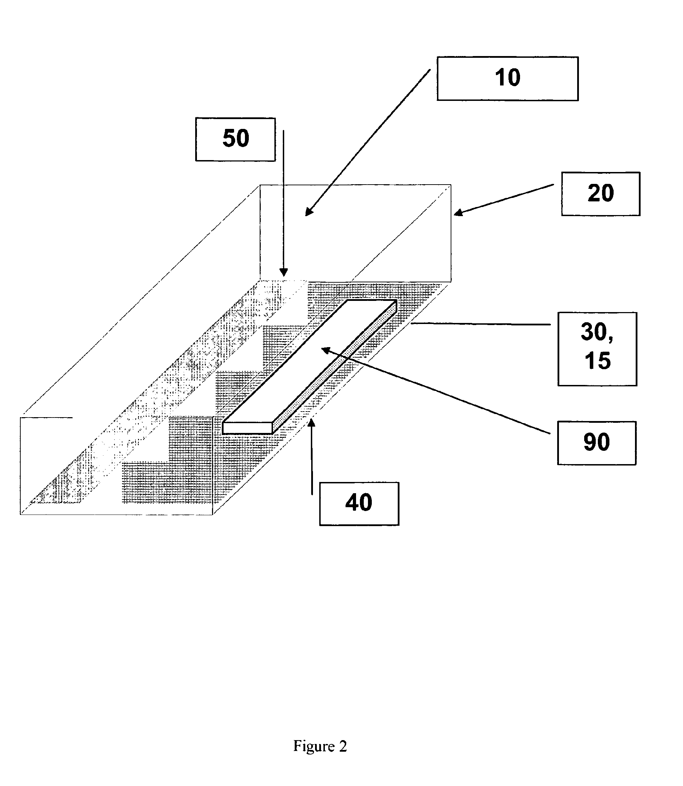

Figure 2 shows an apparatus for manufacture of a single silk mono-filament fibre.
Figure 3 shows a cross sectional view of a single silk mono-filament fibre.

### Detailed Description ofInvention

For a complete understanding of the present disclosure and the advantages thereof, reference is now made to the following detailed description taken in conjunction with the figures.

It should be appreciated that the various aspects of the disclosure discussed herein are merely illustrative of the specific ways to make and use the technology and do not therefore limit the scope of the technology when taken into consideration with the claims and the following detailed description.

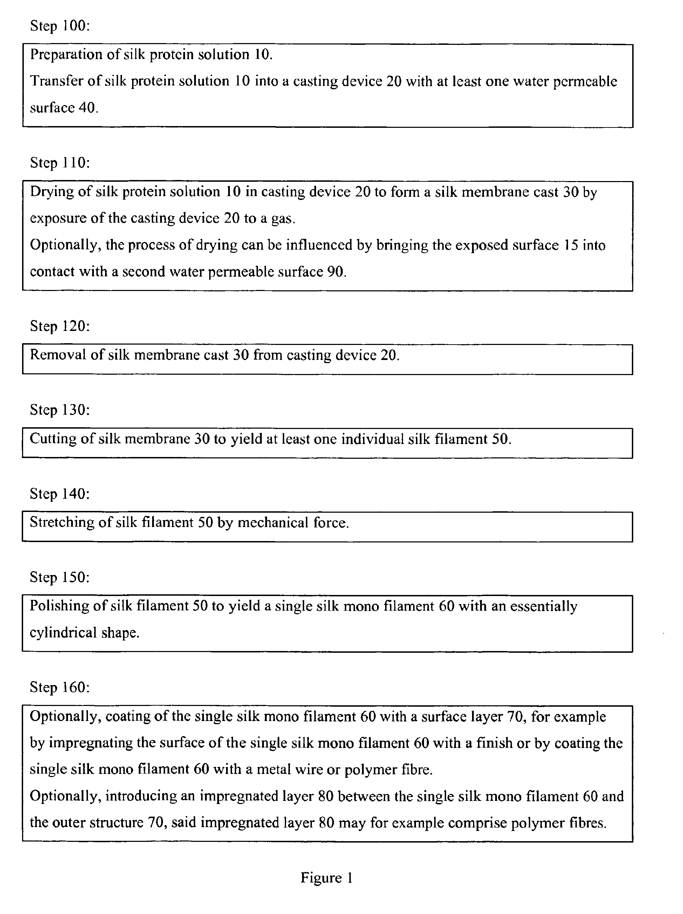

A method for the manufacture of a single silk mono-filament fibre is shown in figure 1. In a first step 100, a silk protein solution 10 is manufactured with a silk protein content of between 0.3 % and 30 % (w/w.). The silk protein solution 10 is manufactured as described according to the US Patent Publication No. 7,041,797 B2. The silk protein solution 10 is then transferred onto a water permeable surface 40 of a casting device 20. The casting device 20 comprises at least one water-permeable surface 40. The water-permeable surface 40 is present as a base of the casting device 20.

The casting device 20 can be made from glass, plastic or can be made from polytetrafluoroethylene (PTFE). The casting device 20 can also be made from any other material that is suitable for use with the silk protein solution 10.

The water-permeable surface 40 can be any one of a water-permeable material, such as clay or a protein compatible polymer-based water-permeable membrane.

In the next step 110, the silk protein solution 10 is dried in the casting device 20. When dry, the silk protein solution 10 forms a silk membrane cast 30. The duration time for drying the silk protein solution 10 depends on the protein content of the silk protein solution 10 and the rate of evaporation of the solvent of the silk protein solution 10. The evaporation rate of the solvent of the silk protein solution 10 can be varied for example by the use of a vacuum and or an air flow.

In the next step 120, the formed silk membrane cast 30 is removed from the casting device 20.

In the next step 130, the silk membrane cast 30 is cut to give at least one individual silk filament 50.

In the next step 140, the silk filament 50 is stretched by a mechanical means.

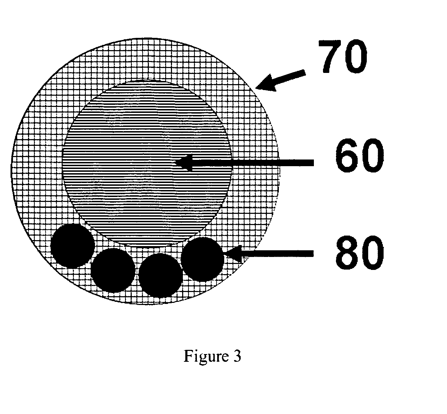

In the next step 150, the silk filament 50 is polished to yield the single silk mono filament 60. The single silk mono filament 60 has essentially a cylindrical shape (see figure 3).

In a further aspect 160, the single silk mono filament 60 may be further optimized by coating the single silk mono filament 60 with a surface layer 70. The single silk mono filament 60 may be coated with the surface layer 70 to improve the resistance of the single silk mono filament 60 to water. The single silk mono filament 60 may be coated with the surface layer 70 by coating with a metal wire or by coating with a polymer fibre.

In a further aspect of the present invention, the material properties of the single silk mono filament 60 may be further enhanced by the introduction of an impregnated layer 80. The impregnated layer 80 is a substance that is embedded between the single silk mono filament 60 and the surface layer 70. The impregnated layer 80 may for example be a polymer fibre.

The following example for carrying out the present disclosure is offered for illustrative purposes only and is not intended to limit the scope of the technology in any way.

### Example 1

The silk protein membrane cast 30 was made by transferring a 450 ml silk protein solution 10 with approximately a 10 % silk protein content into the casting device 20 (390 mm x 110 mm x 20 mm). The casting device 20 comprises a base of water permeable surface 40. The water permeable surface 40 is a water permeable modelling clay (Glorex GmbH, Art No. 68075201).

The silk protein solution 10 was manufactured according to the disclosure of International Patent Application Publication No. WO/2007/098951.

After filling the casting device 20 with the silk protein solution 10, the casting device 20 was positioned such that air was able to circulate around the top and around the bottom of the casting device 20. The ability of air to circulate around the top of the casting device 20 enables efficient evaporation of the solvent from the silk protein solution 10. The ability of air to circulate around the bottom of the casting device 20 facilitates diffusion of the solvent of the silk protein solution 10 through the water permeable surface 40.

After drying the silk protein solution 10 at room temperature, a silk membrane cast 30 with a thickness of between 0.5 mm and 1.2 mm was manufactured. The thickness of the silk membrane cast 30 depends on the volume and the concentration of the silk protein solution 10.

The silk membrane cast 30 was then cut into individual rectangular silk filament 50 samples (390 mm x 1 mm x 1 mm).

The silk filament 50 samples were then stretched manually to approximately twice their original length into the single silk mono filament 60.

Three samples of the single silk mono filament 60 were then weight tested to determine the tensile strength using a digital balance (Kern CH 50 K50). The three samples of the single silk mono filament 60 showed tensile strength of 53 Newtons, 44 Newtons and 54 Newtons, respectively.

The fact that such a tensile strength can be achieved with the single silk mono-filament fibres manufactured from native silk protein materials and not through bundling methods of a plurality of silk filament fibres or through use of a spinning technology was surprising and not predictable from the prior art.

### Example 2

The silk protein membrane cast 30 was made by transferring a 80 ml silk protein solution 10 with approximately a 10 % silk protein content into the casting device 20 (80 mm x 80 mm x 20 mm). The casting device 20 comprises a base of water permeable surface 40. The water permeable surface 40 is a water permeable modelling gypsum (Pufas Werk KG GmbH, Modellgips für Bau + Hobby).

The silk protein solution 10 was manufactured according to the disclosure of International Patent Application Publication No. WO/2007/098951.

After filling the casting device 20 with the silk protein solution 10, the casting device 20 was positioned such that air was able to circulate around the top and around the bottom of the casting device 20. The ability of air to circulate around the top of the casting device 20 enables efficient evaporation of the solvent from the silk protein solution 10. The ability of air to circulate around the bottom of the casting device 20 facilitates diffusion of the solvent of the silk protein solution 10 through the water permeable surface 40.

After drying the silk protein solution 10 at room temperature, the silk membrane cast 30 with a thickness of approximately 1 mm was manufactured. The thickness of the silk membrane cast 30 depends on the volume and the concentration of the silk protein solution 10.

Having thus described the present technology in detail, it is to be understood that the foregoing detailed description of the technology is not intended to limit the scope of the technology thereof. What is desired to be protected by letters patent is set forth in the following claims.

### Reference Numerals

- 10: Silk protein solution
- 15: Exposed surface
- 20: Casting device
- 30: Silk membrane cast
- 40: Water-permeable surface
- 50: Silk filament
- 60: Single silk mono filament
- 70: Surface layer
- 80: Impregnated layer
- 90: Second water permeable surface

## Claims

1. A protein casting device (20) for casting an object (60) comprising:
- a stationary solid support with at least one water or water vapour permeable surface for supporting a first surface of the object (60) and allowing diffusion from the object (60); and
- an exposed region allowing a second surface of the object (60) to be exposed to a gas.

2. The protein casting device (20) of claim 1 wherein the at least one water or water vapour permeable surface is made of clay or gypsum.

3. A method for the manufacture of objects (60) comprising:
- transferring (100) a liquid protein (10) onto a solid support with at least one water permeable surface;
- allowing the liquid protein (10) to dry (110) on the solid support to form a membrane cast (30);
- forming at least one precursor element from the membrane cast (30) to form the object (60); and
stretching (140) said at least one precursor element to form the object (60).

4. The method of claim 3 , further comprising exposing the liquid protein (10) to a conditioned gas.

5. The method of claim 4, further comprising adjusting water-vapour content of the conditioned gas.

6. The method of any one of claims to 5 wherein the liquid protein (10) is selected from the group consisting of a liquid artificial silk protein, a liquid natural silk protein and a liquid native silk protein.

7. The method of one of claims 3 to 6 wherein the at least one precursor element is substantially rectangular shaped.

8. A silk mono-filament (60) having a breaking force of at least 40 N.

9. The silk mono-filament (60) of claim 8, further comprising a material selected from the group consisting of an artificial silk protein, a natural silk protein or a native silk protein.

10. The silk mono-filament (60) of any one of claims 8 to 9, further comprising a surface layer (70).

11. The silk mono-filament (60) of claim 10 wherein the surface layer (70) is one of a metal wire or a polymeric fibre.

12. The silk mono-filament (60) of any one of claims 8 to 11, further comprising an impregnated layer (80) in the surface layer (70).

13. The silk mono-filament (60) of claim 12 wherein the impregnated layer (80) is a polymeric fibre.

14. A use of the silk mono-filament (60) according to any one of claims 8 to 13 for use as a musical string.

15. A use of the silk mono-filament (60) according to any one of claims 8 to 13 for use as a medical device.

## Patentansprüche

1. Proteingießvorrichtung (20) zum Gießen eines Objekts (60) umfassend:
- ein stationäres festes Trägermaterial, mit wenigstens einer wasser- oder wasserdampfdurchlässigen Oberfläche zum Tragen einer ersten Oberfläche des Objekts (60), welches eine Diffusion von dem Objekt (60) gestattet; und
- einen exponierten Bereich, welcher einer zweiten Oberfläche des Objekts (60) gestattet einem Gas ausgesetzt zu sein.

2. Proteingießvorrichtung nach Anspruch 1 bei der die wenigstens eine wasser- oder wasserdampfdurchlässige Oberfläche aus Ton oder Gips hergestellt ist.

3. Ein Verfahren für die Herstellung von Objekten (60) umfassend:
- Übertragen (100) eines flüssigen Proteins (10) auf ein festes Trägermaterial mit wenigstens einer wasserdurchlässigen Oberfläche;
- Trocknenlassen (110) des flüssigen Proteins (10) auf dem festen Trägermaterial zur Erzeugung einer Gussmembran (30);
- Ausformen wenigstens eines Vorgängerelements von der Gussmembran (30) zur Bildung des Objekts (60); und
- Dehnen (140) des wenigstens einem Vorgängerelement zur Erzeugung des Objekts (60).

4. Verfahren nach Anspruch 3, ferner umfassend, dass das flüssige Protein (10) einem konditioniertem Gas ausgesetzt wird.

5. Verfahren nach Anspruch 4, ferner umfassend eine Anpassung des Wasserdampfgehaltes des konditionierten Gases.

6. Verfahren nach einem der Ansprüche 3 bis 5, bei dem das flüssige Protein (10) aus der Gruppe der folgenden Stoffe gewählt ist: flüssiges, künstliches Seidenprotein; flüssiges natürliches Seidenprotein oder flüssiges, natives Seidenprotein.

7. Verfahren nach einem der Ansprüche 3 bis 6, bei dem das wenigstens eine Vorgängerelement eine im Wesentlichen rechteckige Form aufweist.

8. Ein Seidenmonofilament (60) welches eine Bruchfestigkeit von mindestens 40 N aufweist.

9. Das Seidenmonofilament (60) nach Anspruch 8, ferner bestehend aus einem Stoff, welcher aus der Gruppe der folgenden Stoffe ausgewählt ist: flüssiges, künstliches Seidenprotein; flüssiges natürliches Seidenprotein oder flüssiges, natives Seidenprotein.

10. Das Seidenmonofilament (60) nach einem der Ansprüche 8 bis 9, ferner umfassend eine Oberflächenschicht (70).

11. Das Seidenmonofilament (60) nach Anspruch 10, wobei die Oberflächenschicht (70) entweder aus einem Metalldraht oder einer Polymerfaser besteht.

12. Das Seidenmonofilament (60) nach einem der Ansprüche 8 bis 11, welches in der Oberflächenschicht (70) eine imprägnierte Schicht (80) beinhaltet.

13. Das Seidenmonofilament (60) nach Anspruch 12, wobei die imprägnierte Schicht (80) eine Polymerfaser ist.

14. Verwendung des Seidenmonofilaments (60) nach einem der Ansprüche 8 bis 13 als Saite für ein Musikinstrument.

15. Verwendung des Seidenmonofilaments (60) nach einem der Ansprüche 8 bis 13 als Medizinprodukt.

## Revendications

1. Dispositif de moulage de protéine (20) pour mouler un objet (60), comprenant :
- un support solide stationnaire avec au moins une surface perméable à l'eau ou à la vapeur d'eau, pour supporter une première surface de l'objet (60) et permettre la diffusion depuis l'objet (60) ; et
- une région exposée, permettant à une deuxième surface de l'objet (60) d'être exposée à un gaz.

2. Dispositif de moulage de protéine (20) selon la revendication 1, dans lequel ladite au moins une surface perméable à l'eau ou à la vapeur d'eau est faite de gypse ou d'argile.

3. Procédé de fabrication d'objet (60), comprenant les étapes consistant à :
- transférer (100) une protéine liquide (10) sur un support solide avec au moins une surface perméable à l'eau ;
- permettre à la protéine liquide (10) de sécher (110) sur le support solide pour former une coulée de membrane (30) ;
- former au moins un élément précurseur depuis la coulée de membrane (30) pour former l'objet (60) ; et
- étirer (140) ledit au moins un élément précurseur pour former l'objet (60).

4. Procédé selon la revendication 3, comprenant en outre l'étape consistant à exposer la protéine liquide (10) à un gaz conditionné.

5. Procédé selon la revendication 4, comprenant en outre l'étape consistant à ajuster le contenu eau-vapeur du gaz conditionné.

6. Procédé selon l'une quelconque des revendications 3 à 5, dans lequel la protéine liquide (10) est choisie dans le groupe constitué par une protéine de soie artificielle liquide, une protéine de soie naturelle liquide, et une protéine de soie native liquide.

7. Procédé selon l'une des revendications 3 à 6, dans lequel ledit au moins un élément précurseur est sensiblement de forme rectangulaire.

8. Mono-filament de soie (60) ayant une force de rupture d'au moins 40 N.

9. Mono-filament de soie (60) selon la revendication 8, comprenant en outre un matériau sélectionné dans le groupe constitué par une protéine de soie artificielle, protéine de soie naturelle et une protéine de soie native.

10. Mono-filament de soie (60) selon l'une quelconque des revendications 8 à 9, comprenant en outre une couche surfacique (70).

11. Mono-filament de soie (60) selon la revendication 10, dans lequel la couche surfacique (70) est l'un d'un fil métallique ou d'une fibre de polymère.

12. Mono-filament de soie (60) selon l'une quelconque des revendications 8 à 11, comprenant en outre une couche imprégnée (80) dans la couche surfacique (70).

13. Mono-filament de soie (60) selon la revendication 12, dans lequel la couche imprégnée (80) est une fibre polymérique.

14. Utilisation d'un mono-filament de soie (60) selon l'une quelconque des revendications 8 à 13 pour une utilisation en tant que corde musicale.

15. Utilisation du mono-filament de soie (60) dans l'une quelconque des revendications 8 à 13, pour utilisation en tant que dispositif médical.
